# EUROPEAN PATENT SPECIFICATION

(11) **EP 4 074 394 B1**
(45) Date of publication and mention of the grant of the patent: **13.03.2024**
(21) Application number: 20900619.6
(22) Date of filing: 10.12.2020
(51) Int. Cl.: B01D 3/42, B01D 3/14

(54) **GAS PHASE DISTRIBUTION CONTROL APPARATUS FOR A DIVIDING WALL COLUMN**
VORRICHTUNG ZUR GASPHASENVERTEILUNG FÜR EINE TRENNWANDSÄULE
APPAREIL DE COMMANDE DE DISTRIBUTION DE PHASE GAZEUSE POUR UNE COLONNE À PAROI DE SÉPARATION

(30) Priority: 10.12.2019 CN 201911255201
(43) Date of publication of application: 19.10.2022
(73) Proprietor: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: CHEN, Jianbing, Dalian, Liaoning 116045 (CN); BO, Dechen, Dalian, Liaoning 116045 (CN); ZHANG, Ying, Dalian, Liaoning 116045 (CN); GAO, Ming, Dalian, Liaoning 116045 (CN); WANG, Luyao, Dalian, Liaoning 116045 (CN); XING, Bing, Dalian, Liaoning 116045 (CN); HU, Jun, Dalian, Liaoning 116045 (CN); LI, Mingyi, Dalian, Liaoning 116045 (CN)
(74) Representative: Hoffmann Eitle
(86) International application number: PCT/CN2020/135148
(87) International publication number: WO 2021/115363

(56) References cited:
- EP-A1- 3 061 507
- WO-A1-2016/133876
- CN-A- 104 548 641
- CN-A- 106 139 627
- CN-A- 108 043 060
- CN-A- 108 619 752
- CN-A- 111 434 366
- CN-A- 111 434 367
- CN-U- 201 648 299
- CN-U- 203 620 278
- CN-U- 205 145 640

## Description

### FIELD

The present invention relates to the field of chemical rectification, in particular to a gas phase distribution control apparatus and a dividing wall column including the gas phase distribution control apparatus.

### BACKGROUND

At present, the rectification process in refineries and chemical plants mainly uses a conventional column to separate materials. Theoretically, to obtain N products, N-1 rectifying columns have to be built up, and the corresponding investment and energy consumption are high. Therefore, in order to reduce the investment and energy consumption of the process, it is the best choice to develop new rectifying equipment. Compared with traditional rectifying columns, dividing wall columns (DWC) can greatly reduce the energy consumption and investment, and are typical new energy-saving rectifying equipment.

A dividing wall column is formed by arranging a vertical dividing wall extending axially in the middle section of a conventional rectifying column. The dividing wall divides the space in the column into four parts: left side of the dividing wall (feeding zone), right side of the dividing wall (discharging zone), upside of the dividing wall (common rectifying section), and underside of the dividing wall (common stripping section). A dividing wall column has great advantages for multi-component rectification. Compared with the conventional rectifying column, the dividing wall column (DWC) can save energy by 20%~50% since there is no back mixing phenomenon in it; in addition, it can save about 30% investment since a column and a reboiler are omitted.

In the prior art, for example, in the patent application document No. US 2011139604 A1, a dividing wall column has been disclosed. In the dividing wall column, the dividing wall is in an asymmetric form, and can be adjusted by utilizing the feeding port and the discharging port in the middle section of the column as asymmetric points, so that the space at the bottom end of the feeding port on the feeding side is increased, while the space at the underside of the discharging port is decreased, thus attaining a purpose of balancing the gas phase load and liquid phase load in the column.

In the prior art, for example, in the patent application document No. CN102631791A, a method for controlling a dividing wall column has been disclosed. The application has disclosed a method for controlling a dividing wall column with four control circuits, namely: an overheat distillate composition control circuit, which controls the amount of top reflux by controlling the concentrations of the components of the overheat distillate; a side-cut distillate composition control circuit, which controls the side-cut flow by controlling the concentrations of the components of the side-cut distillate; a bottom distillate composition control circuit, which controls the thermal load of the bottom of the column by controlling the concentrations of the components of the bottom distillate; and a control circuit for gas phase composition at the top of the pre-fractionation section, which controls the liquid separation ratio in the dividing wall column by controlling the concentrations of the heavy gas phase components at the top of the pre-fractionation section. All of the control circuits preferably are PID control circuits. The control method can realize stable control in the entire column when the feed flow rate or the feed composition changes, so as to ensure product quality and maintain the energy consumption in the entire column in an optimal range. In addition, EP 3 061 507 A1 discloses a divided-wall column, and CN 106 139 627 A discloses a rectifying column with a dividing wall.

In essence, the existing dividing wall columns still can't solve the following two problems thoroughly: (1) the control of the gas phase distribution at the two sides of the dividing wall in the dividing wall column is always inaccurate and the gas phase distribution ratio adjustment range is narrow; consequently, the gas-liquid phase mass transfer effect at the two sides of the dividing wall is poor, and the separation effect is poor; (2) the gas-liquid phase load, concentrations of components, and heat demand at the two sides of the dividing wall are different, and a heat back-mixing phenomenon exists in the dividing wall section; consequently, the product purity in the dividing wall column can be further improved.

Therefore, there is an urgent need for a gas phase distribution control apparatus that can control the gas phase distribution at the two sides of the dividing wall more accurately, avoid heat back-mixing as far as possible, and further improve product purity.

The information disclosed in the BACKGROUND section is only intended to make the background of the present invention understood better, and should not be deemed as acknowledging or implying in any form that the information constitutes the prior art well known to those having ordinary skills in the art.

### SUMMARY

The object of the present invention is to provide a gas phase distribution control apparatus and a dividing wall column including the same, so as to overcome the shortcomings of inaccurate control and narrow adjustment range of gas phase distribution ratio in the prior art.

To attain the above object, the present invention provides a gas phase distribution control apparatus, which comprises: a filler layer for removing liquid in a gas phase; and a distribution layer arranged above the filler layer and provided with at least two gas phase channels that are independent of each other and respectively communicate with the filler layer and the upside of the distribution layer, wherein each gas phase channel has an inlet close to the filler layer and an outlet close to the upside of the distribution layer, and at least two of the inlets are respectively arranged with an opening that is adjustable in size by means of a gas phase distribution mechanism according to a preset gas phase distribution ratio.

The distribution layer is provided with two of the gas phase channels, and the gas phase distribution mechanism comprises:
a hollow circular ring that is fixed above the filler layer and comprises three sections sequentially arranged in circumferential direction, wherein the bottom of one section is provided with two inlets that are spaced apart from each other or communicate with each other in the circumferential direction of the hollow circular, and the other two sections are respectively located at two ends of said one section and have respectively an outlet in the top part; and
a slider that is adaptively arranged in inner cavity of the hollow circular ring and slidable in said one section in the circumferential direction of the hollow circular ring,
the gas phase distribution mechanism is arranged to adjust the size of the two inlets by changing the position of the slider, or the gas phase distribution mechanism comprises:
   a hollow circular ring that is fixed above the filler layer and comprises at least four sections arranged sequentially in circumferential direction, wherein the bottom parts of at least two of the at least four sections are respectively provided with an inlet, and at least the other two of the at least four sections are respectively provided with an outlet in the top part, and the inlets and the outlets are alternately arranged in the circumferential direction of the hollow circular ring; and
   at least two sliders that are adaptively arranged in inner cavity of the hollow circular ring and slidable in the circumferential direction of the hollow circular ring,
   the gas phase distribution mechanism is arranged to adjust the size of the at least two inlets by changing the positions of the at least two sliders.

Optionally, the hollow circular ring comprises four sections L1, L2, L3 and L4 that have the same arc length and are arranged sequentially, wherein the bottom parts of L 1 and L3 are respectively provided with a hollowed inlet part to form the two inlets, and the top parts of L2 and L4 are respectively provided with a hollowed outlet part to form the two outlets;
the gas phase distribution mechanism comprises two sliders that are slidably arranged in L1 and L3 respectively.

Optionally, the hollow circular ring comprises four sections L1, L2, L3 and L4 that have the same arc length and are arranged sequentially, wherein the bottom parts of L 1 and L2 are respectively provided with a hollowed inlet part to form the two inlets, and the top parts of L3 and L4 are respectively provided with a hollowed outlet part to form the two outlets;
the gas phase distribution mechanism comprises two sliders that are slidably arranged in L1 and L2 respectively.

Optionally, the slider(s) is/are a magnetic component, and the gas phase distribution mechanism further comprises an electromagnetic distribution control component, which comprises:
an arc-shaped track coaxially arranged outside the hollow circular ring;
an electromagnet that is arranged on the arc-shaped track and movable along the arc-shaped track; and
an electromagnetic controller arranged to drive the electromagnet to move according to the preset gas phase distribution ratio so as to drive the slider to a desired position.

Optionally, the inner cavity of the hollow circular ring has a circular cross section, and the slider is a hollow iron ball.

Optionally, the gas phase distribution control apparatus comprises a baffle plate arranged between the distribution layer and the filler layer so that the filler layer communicates with the upside of the distribution layer only through the gas phase channel.

Optionally, the baffle plate is hermetically arranged at the inner side of the hollow circular ring and located at a middle position of the hollow circular ring in the axial direction.

Optionally, a filler grille is provided at the bottom of the filler layer.

Optionally, the porosity of the filler grille is 5%~15%.

In another aspect, the present invention provides a dividing wall column, which comprises the gas phase distribution control apparatus described above, wherein a dividing wall of the dividing wall column is located in the middle section of the column body and extends in the axial direction of the column body, and divides the internal space of the column body into a common rectifying section above the dividing wall, a feeding section on the left side of the dividing wall, a discharging section on the right side of the dividing wall, and a common stripping section below the dividing wall, the gas phase distribution control apparatus is arranged below the dividing wall, and said at least two outlets communicate with the two sides of the dividing wall respectively.

Optionally, the gas phase distribution control apparatus comprises two gas rise channels that communicate with said at least two outlets respectively and lead to the two sides of the dividing wall respectively.

Optionally, the dividing wall has a multi-layer hollow structure, and the hollow part of the dividing wall is filled with an inert gas or heat-insulating material.

Optionally, the cross-sectional area of the gas rise channel is 10%~40% (0.1-0.4 times) of the cross-sectional area in the column body.

Optionally, the cross section of the gas rise channel is rectangular, square or circular.

Compared with the prior art, the present invention attains the following beneficial effects:
(1) Electromagnetic distribution and adjustment is employed for gas phase distribution control; specifically, signals are transferred from a computer control system to the gas phase distribution control apparatus, so as to realize separate and flexible distribution and control of the gasses in the thermally coupled rectifying column, improve the accuracy of control on the gas phase load and liquid phase load at the two sides of the dividing wall in the thermally coupled rectifying column, improve the product separation effect, and simplify the control on the dividing wall column.
(2) The dividing wall in the middle section of the thermally coupled rectifying column is in a heat insulating design to prevention heat transfer between the left side and the right side of the dividing wall. In the actual operation process, the operating parameters at the left side and right side of the dividing wall are set differently for different materials and properties, so that the pre-separation section and the side-cut product section operate independently from each other, the heat back-mixing phenomenon is controlled effectively, and the purity of the mid-section product is improved effectively.

The above description is only an overview of the technical scheme of the present invention. Hereunder one or more preferred embodiments will be presented and described with reference to the accompanying drawings in detail, in order to make the technical means of the present invention understood more clearly and implemented on the basis of the description, and make the above-mentioned and other objects, technical features and advantages of the present invention understood more easily.

### BRIEF DESCRIPTION OF THE DRAWINGS

Fig. 1 is a schematic structural diagram of the dividing wall column in the present invention;
Fig. 2 is a schematic cross-sectional view at the dividing wall of the dividing wall column in the present invention (illustrating the layered structure of the dividing wall);
Fig. 3 is a schematic structural diagram of the gas phase distribution control apparatus in the dividing wall column in the present invention;
Fig. 4 is a schematic diagram of the inlet of the gas phase channel of the gas phase distribution control apparatus in the present invention (bottom view of the hollow circular ring);
Fig. 5 is a schematic diagram of the outlet of the gas phase channel of the gas phase distribution control apparatus in the present invention (top view of the hollow circular ring);
Fig. 6 is a schematic structural diagram of the electromagnetic distribution control component in the gas phase distribution control apparatus in the present invention.

### Reference Numbers:

T - dividing wall column, T1 - common rectifying section, T2 - feeding section, T3 - discharging section, T4 - common stripping section; C1 - top condenser, G1 - mid-section buffer tank, G2 - top liquid separation tank, H1 - mid-section reflux heater at feeding side, H2 - mid-section reflux heater at discharging side, P1 - mid-section reflux pump, H3 - reboiler;
1 - raw material to be treated, 2 - top gas phase, 3 - condensed liquid, 4 - top product, 5 - top reflux liquid, 6 - mid-section product, 7 - mid-section reflux liquid at feeding side, 8 - mid-section reflux liquid at discharge side, 9 - side-cut product, 10 - liquid phase entering into the common stripping section from the dividing wall section, 11 - bottom liquid phase, 12 - bottom product, 13 - gas phase returning to the column;
20 - column wall, 21 - first heat-insulating layer, 22 - second heat-insulating layer, 23 - hollow layer;
30 - gas phase distribution control apparatus, 31 - gas rise channel, 32 - central partition in the distribution layer, 33 - iron ball (33A and 33B), 34 - filler grille, 35 - filler layer, 36 - hollow circular ring, 37 - steel plate;
S1 - first inlet zone, S2 - second inlet zone, S3 - third inlet zone, S4 - fourth inlet zone; E1 - first outlet zone, E2 - second outlet zone;
40 - electromagnetic distribution control component, 41 - arc-shaped track, 42 - electromagnet, 43 - electromagnetic controller.

### EMBODIMENTS

Hereunder some specific embodiments of the present invention will be detailed with reference to the accompanying drawings. However, it should be understood that the scope of protection of the present invention is not limited to the embodiments.

Unless otherwise expressly stated, throughout the specification and claims, the term "comprise" or "include" or their variants such as "comprising" or "including" shall be understood as including the enumerated elements or components, without excluding other elements or components.

In this document, for the convenience of description, spatially relative terms such as "underside", "below", "bottom", "upside", "above", and "top", etc., may be used to describe the relationship between one element or feature and another element or feature in the drawings. It should be understood that the spatially relative terms are intended to include different directions of the objects in use or operation other than the directions depicted in the drawings. For example, if an object in a drawing is turned upside down, an element described as "below" or "bottom" other elements or features will be oriented "above" the elements or features. Therefore, the exemplary term "below" may include "below" and "above" directions. Objects may also have other orientations (rotated by 90 degrees or other orientations), and the spatially relative terms used herein should be interpreted accordingly.

In this document, the terms "first", "second", etc. are used to distinguish two different elements or parts, rather than to define a specific position or relative relationship. In other words, in some embodiments, the terms "first", "second", etc. may also be interchanged with each other.

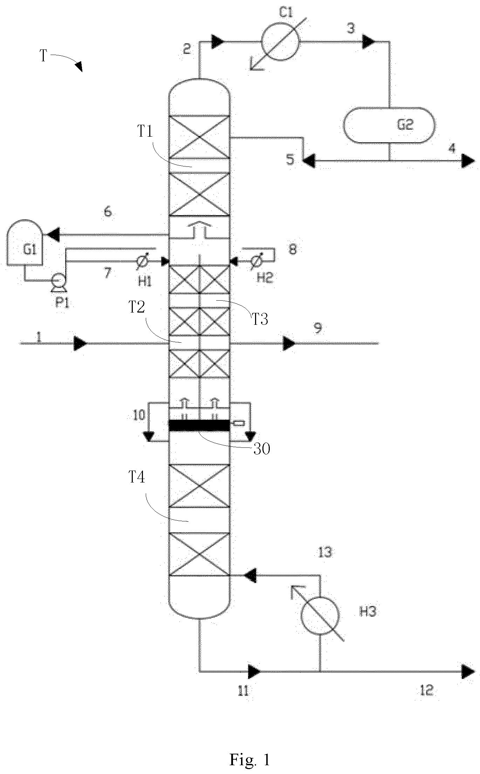

As shown in Fig. 1, in the dividing wall column T in the present invention, a vertical dividing wall extending along the axis of the column body (e.g., the vertical center line of the column body in Fig. 1) is arranged, and divides the internal space of the column into four parts: a common rectifying section T1 above the dividing wall, a feeding section T2 on the left side of the dividing wall, a discharging section T3 on the right side of the dividing wall, and a common stripping section T4 below the dividing wall. A raw material 1 to be treated is fed into the feeding section T2 of the dividing wall column, the feed liquid is separately preliminarily, the top gas phase 2 is cooled by an top condenser C1, the condensed liquid 3 enters into an top liquid separation tank G2, one part of the liquid (i.e., top reflux liquid 5) is returned to the top of the column, while the other part of the liquid is outputted as top product 4 from the apparatus. The top reflux liquid 5 passes through the common rectifying section T1 and then is collected in a liquid receiving tray above the dividing wall, the collected liquid is taken as a mid-section product 6 and enters into a mid-section buffer tank G1; then the mid-section product flows through a mid-section reflux pump P1 and mid-section reflux heaters (including a mid-section reflux heater H1 at the feeding side and a mid-section reflux heater H2 at the discharging side) where the reflux temperature is controlled, then enters into the two sides of the dividing wall; the liquid phases entering into the two sides of the dividing wall are regarded as mid-section reflux liquid 7 at the feeding side and mid-section reflux liquid 8 at the discharging side respectively, and finally a side-cut product 9 is formed in the discharging section T3. A gas phase distribution control apparatus 30 is arranged below the dividing wall, and gas phase flow distribution is carried out for the rising gas phase under the action of a computer control system. The gas phase rises, while the liquid phase 10 flows downward from the dividing wall section into the common stripping section. Then the liquid flows from the common stripping section T4 to the bottom of the column, thus a bottom liquid phase 11 is obtained and finally a bottom product 12 is formed. The liquid passing through a bottom reboiler H3 is transformed into a gas phase, and the gas phase 13 returning to the column enters passes through a filler grille at the bottom of the gas phase distribution control apparatus 30 in the present invention from the common stripping section T4 and enters into the gas phase distribution control apparatus 30. The gas phase is controlled and distributed accurately by the apparatus and enters into the two sides of the dividing wall; thus the entire gas distribution control process is completed.

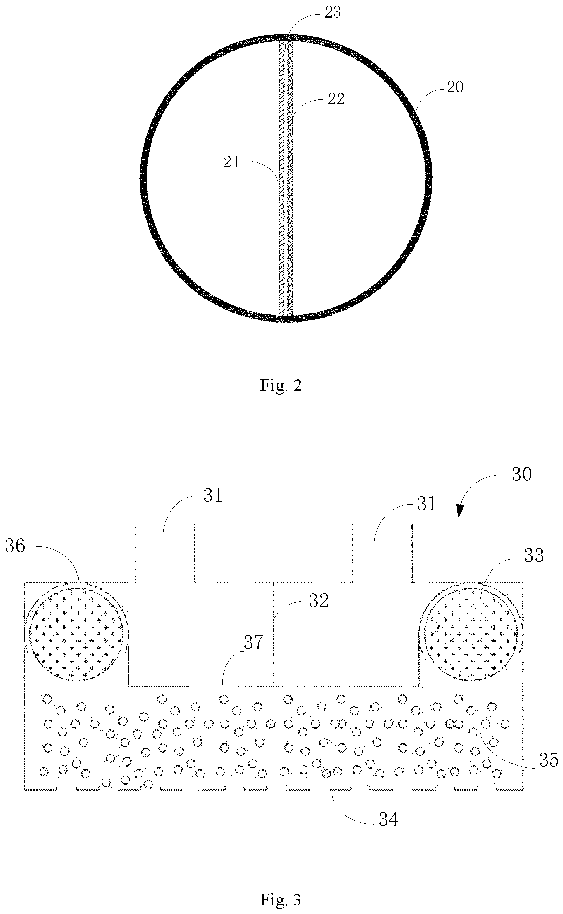

As shown in Figs. 1 and 3, the gas phase distribution control apparatus 30 in the present invention is arranged below the dividing wall of the dividing wall column T, and comprises a filler layer 35 at the lower part and a distribution layer at the upper part. The filler material in the filler layer may be a conventional filler material that has a gas-liquid separation function, such as one or more of wire mesh filler, bulk filler, or regular corrugated plate filler, etc.; as a preferred but non-limiting example, the filler material may be a wire mesh material, and the height of the filler layer may be set according to the dividing wall column T and the actual application condition, usually is 10-50mm, preferably is 10-40mm. The filler layer 35 is used to remove liquid from the gas phase that returns to the column from the common stripping section. A filler grille 34 is arranged at the bottom of the filler layer 35, the porosity of the filler grille 34 may be 5~20%, preferably is 5%~15%, the filler grille 34 is used to support the filler material, and the pores in the filler grille 34 are used to form channels through which the gas phase enters into the filler layer 35. The distribution layer is located above the filler layer 35, and is provided with at least two gas phase channels that are separated from each other, each gas phase channel has an inlet close to the filler layer 35 and an outlet close to the upside of the distribution layer, at least two inlets of the at least two gas phase channels are set with an opening that can be adjusted in size by a gas phase distribution mechanism according to a preset gas phase distribution ratio. At least two outlets of the at least two gas phase channels respectively communicate with two gas rise channels 31 that lead to the two sides of the dividing wall.

The gas phase distribution mechanism described above may be implemented in a variety of ways. In an embodiment of the present invention, the distribution layer is provided with two gas phase channels, the gas phase distribution mechanism comprises a hollow circular ring 36 and a slider, wherein the hollow circular ring 36 is fixed above the filler layer 35 and comprises three sections that are arranged sequentially in its circumferential direction, the bottom of one side is provided with two inlets that are spaced from each other at an interval in the circumferential direction of the hollow circular ring 36 (e.g., the two inlets are two strip-shaped openings that extend in an arc-shaped form) or communicate with each other (e.g., the two inlets are a strip opening that extends in an arc-shaped form), the other two sections are at the two ends of said one section respectively and have an outlet at the top respectively; a slider is adaptively arranged in the inner cavity of the hollow circular ring 36 and can slide in said one section in the circumferential direction of the hollow circular ring 36, and the gas phase distribution mechanism is arranged to adjust the opening size of the two inlets by altering the position of the slider. It can be understood that the inlet and outlet may be hollowed parts (i.e., strip-shaped openings extending in an arc shape) or formed by a plurality of aggregated holes, as long as the area of communication between them and the corresponding gas phase channel can vary with the position change of the slider. The separation the two gas phase channels between each other means that the two outlets are separated from each other, i.e., the two outlets don't communicate with each other, but communicate with two gas rise channels 31 respectively.

According to another embodiment of the present invention, the gas phase distribution mechanism comprises a hollow circular ring 36 and at least two sliders, wherein the hollow circular ring 36 is fixed above the filler layer 35 and comprises at least four sections arranged sequentially in its circumferential direction, at least two of the at least four sections are provided with an inlet at the bottom respectively, and at least the other two of the at least four sections are provided with an outlet at the top respectively, and the inlets and the outlets are arranged alternately in the circumferential direction of the hollow circular ring 36; at least two sliders are adaptively arranged in the inner cavity of the hollow circular ring 36 and can slide in the circumferential direction of the hollow circular ring 36, and the gas phase distribution mechanism is configured to adjust the opening size of at least two inlets by altering the positions of the at least two sliders.

In the above description, it can be understood that the inlets and the outlets are alternately arranged in the circumferential direction of the hollow circular ring 36, which means that the corresponding sections of the hollow circular ring 36 with inlets are alternately arranged with the corresponding sections of the hollow circular ring 36 with outlets, i.e., in every two adjacent sections, one section is provided with an inlet, while the other section is provided with an outlet. The hollow circular ring 36 may comprise four sections, six sections, eight sections, etc., which are sequentially arranged in its circumferential direction. In the case that the hollow circular ring 36 comprises four sections, there are two gas phase channels in the distribution layer, and two outlets of the two gas phase channels respectively communicate with two gas rise channels 31; in the case that the hollow circular ring 36 comprises six sections, there are three gas phase channels in the distribution layer, wherein two outlets of two gas phase channels communicate with one gas rise channel 31, and the outlet of the rest gas phase channel communicates with another gas rise channel 31; in the case that the hollow circular ring 36 comprises eight sections, there are four gas phase channels in the distribution layer, wherein two outlets of two gas phase channels communicate with one gas rise channel 31, and the outlet of the rest two gas phase channels communicate with another gas rise channel 31.

In the above description, the arc lengths of the sections may be equal to or different from each other. In order to facilitate the sliding control of the slider, the slider may be a magnetic component, for example, the slider is a hollow or solid iron ball, and accordingly, the cross section of the inner cavity of the hollow circular ring 36 is circular.

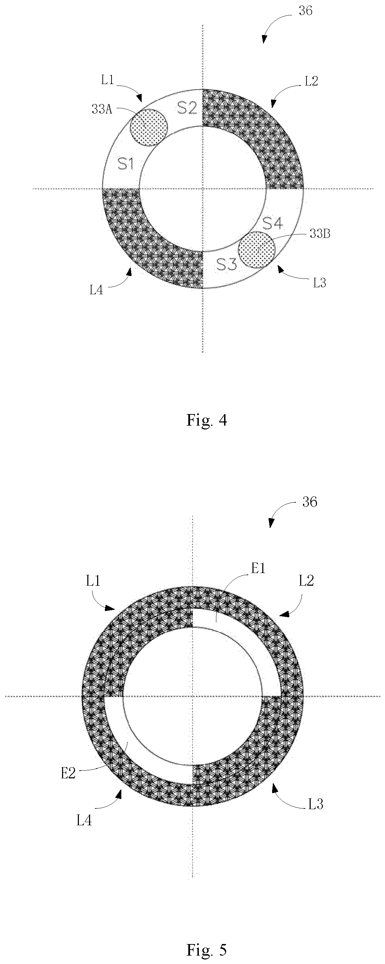

Specifically, for example, in the embodiment shown in Figs. 3-5, the gas phase distribution mechanism comprises a hollow circular ring 36 and an iron ball 33 arranged in the distribution layer. The outer diameter of the hollow circular ring 36 matches the inner diameter of the column body of the dividing wall column T, and the hollow circular ring 36 is fixed above the filler layer 35. As shown in Fig. 4, the hollow circular ring 36 comprises four sections with the same arc length, i.e., L1, L2, L3 and L4, wherein the bottom parts of L1 and L3 are respectively provided with a hollowed inlet part (unfilled part in Fig. 4) to form two inlets of two gas phase channels. As shown in Fig. 5, the top parts of L2 and L4 are respectively provided with a hollowed outlet part (the unfilled part in Fig. 5) to form two outlets of two gas phase channels. The hollowed part may be formed by cutting the hollow circular ring partially, but it should be understood that the hollowed inlet part should be sized to ensure that the iron ball 33 will not fall out from it. Specifically, the following two cutting options may be adopted, scheme 1: as shown in Fig. 4, the bottom ends of the sections L1 and L3 of the hollow circular ring are cut off (as distribution inlets for the gas phase to entry), and the cutting length is preferably the entire length of the bottom ends of the sections L1 and L3. If the circumference of the circular ring is L, the cutting length of the sections L1 and L3 is L/4; as shown in Fig. 5, the top ends of the sections L2 and L4 of the hollow circular ring are cut off (as gas phase distribution outlets), and the cutting length may be L/8 to L/4; preferably, the cutting is carried out at the side near the center of circle, and the cutting length is L/5. As shown in Fig. 4, the iron balls 33 are arranged at the centers of the sections L1 and L3 of the circular ring, and the diameter of the iron balls 33 is slightly smaller than the inner diameter of the hollow circular ring (two iron balls altogether, respectively designated as 33A and 33B), which is to say, the iron balls are in clearance fit with the hollow circular ring, so that the iron ball 33A can roll in the section L1 of the circular ring, and divides the opening area of the section L1 into two parts (designated as S1 and S2 respectively), while the iron ball 33B can roll in the section L3 of the circular ring, and divides the opening area of the section L3 into two parts (designated as S3 and S4 respectively), and the ratio of the volume of gas phase entering into the sections S1+S3 to the volume of gas phase entering into the sections S2+S4 is the distribution ratio of the gas phase entering into the two sides of the dividing wall. When the gas phase distribution control apparatus in the present invention is installed, the central partition 32 in the distribution layer is located on the connecting line between the midpoints of the arc lengths of L1 and L3 (i.e., the connecting line between the centers of the iron balls 33A and 33B at their initial positions), and is in the same plane as the dividing wall in the dividing wall column T. The opening size of the inlet of the gas phase channel is adjustable with the position change of the iron ball, thus the ratio of the volume of gas phase entering into the sections S1+S3 to the volume of gas phase entering into the sections S2+S4 can be control accurately as the two iron balls move respectively. Scheme 2 (not shown in the figure): the bottom ends of the sections L1 and L2 of the hollow circular ring are cut off (as distribution inlets for the gas phase to entry), and the cutting length is L/2; the top ends of the sections L3 and L4 of the hollow circular ring are cut off (as gas phase distribution outlets), preferably near the center of the circle, and the cutting length is 2L/5. An iron ball is arranged at the joint between the sections L1 and L2, and divides the opening area of the sections L1+L2 of the hollow circular ring into two parts. Likewise, the opening size of the inlet of the gas phase channel is adjustable with the position change of the iron ball, and the ratio of the volumes of gas phase entering into the openings of the two parts is the distribution ratio of the gas phase entering into the two sides of the dividing wall. The above two cutting schemes are exemplary schemes, and any variant of the schemes conceived on the basis of the design concept is within the scope of protection of the present invention. The iron ball 33 may be of solid or hollow design, and the hollow design is preferred.

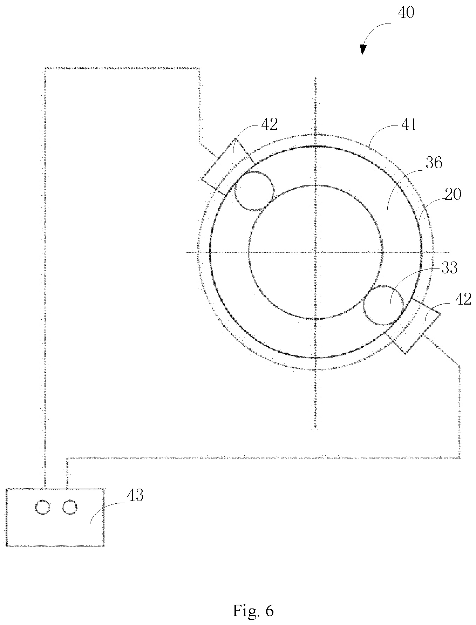

As shown in Fig. 6, in order to accurately control the position of the iron ball 33 as required, the gas phase distribution mechanism in the present invention further comprises an electromagnetic distribution control component 40, which may comprise an arc-shaped track 41, an electromagnet 42 and an electromagnetic controller 43, wherein the arc-shaped track 41 is arranged outside the column body of the dividing wall column T in the circumferential direction, and is in the same horizontal plane as the hollow circular ring 36. The electromagnetic controller 43 receives an instruction to drive the electromagnet 42 to move along the arc-shaped track 41 according to a preset gas phase distribution ratio, and the moving electromagnet 42 drives the iron ball 33 to move to a desired position under the action of attractive force.

Furthermore, as shown in Fig. 3, the gas phase distribution control apparatus 30 comprises a baffle plate arranged between the distribution layer and the filler layer. The baffle plate is arranged to ensure that the rising gas phase can only enter into the distribution layer from the cut in the bottom end of the hollow circular ring (i.e., the aforementioned gas phase distribution inlet), and can only enter into the gas rise channels 31 on the two sides of the dividing wall from the cut in the top end of the hollow circular ring (i.e., the aforementioned gas phase distribution outlet). The baffle plate may be a steel plate 37, which is hermetically arranged inside the hollow circular ring 36 (e.g., by seal welding) and located at the center of the hollow circular ring in the axial direction.

Furthermore, as shown in fig. 3, preferably, but not limitedly, the cross-sectional area of the gas rise channel 31 is 0.1-0.4 times of the cross-sectional area of the column body of the baffle distillation column T, and the cross section of the gas rise channel 31 may be rectangular, square or circular.

In the gas phase distribution control apparatus in the present invention, the rising gas enters into the bottom opening (gas inlet) of the hollow circular ring 36 in the distribution layer, and the electromagnetic controller 43 (see Fig. 6) controls the position of the iron ball 33 in the hollow circular ring, i.e., controls the gas inlet area (the gas inlet area determines the flow rate of the gas). The position of the iron ball 33 is determined by the electromagnetic controller 43 that controls the electromagnet arranged on the outer wall of the column to move along the outer wall of the column. The gas separated by the iron ball 33 enters into the inner cavities of the distribution layer on the two sides of the central partition 32 in the distribution layer through the top openings (gas outlets) of the hollow circular ring, and then enters into the two sides of the dividing wall of the dividing wall column T through the gas rise channels 31; thus a gas distribution control process is completed. The gas phase distribution control apparatus in the present invention can adjust the gas distribution ratio on the two sides of the dividing wall in the column separately and flexibly, so as to achieve an ideal product separation effect.

The dividing wall column T in the present invention may be a plate column or a packed column, and is preferably a plate column. In the dividing wall column T, the dividing wall is located in the middle of the column, within a radial position control range of 0.1-0.8D (D is the diameter of the column), preferably 0.4-0.6D. The height of the dividing wall is controlled within a range of 0.1-0.8L (L is the height of the column), preferably 0.4-0.6L. Furthermore, as shown in Fig. 2, the inner wall 20 of the dividing wall column T is provided with a heat-insulating layer filled with a heat-insulating material to prevent heat transfer through the column wall. The heat-insulating layer is in thickness of 1~10mm, preferably 3~6mm. The heat-insulating layer on the inner wall of the column may be made of aluminum silicate refractory fibers or vacuum heat insulating panels, preferably vacuum heat insulating panels. The dividing wall is in a multi-layer hollow design, and consists of a first heat-insulating layer 21, a second heat-insulating layer 22 and a middle hollow layer 23. The hollow layer 23 may be filled with a heat-insulating material or inert gas to prevent heat transfer through the dividing wall. The multi-layer dividing wall may include 1-5 layers, preferably is 2-3 layers. The heat-insulating material filled in the middle layer may be aluminum silicate refractory fibers. In the case that the dividing wall has 3 or 5 heat-insulating layers, the space of the central layer may be filled with an inert gas, which may be nitrogen, argon, or methane, etc., preferably is nitrogen.

### Example

A raw material 1 containing components A, B and C enters into the feeding section T2 of the dividing wall column T, and the feed liquid is preliminarily separated, so that the light components rise and the heavy components fall. The gas phase in the column passes through the common rectifying section T1 and becomes a top gas phase 2, which passes through the top condenser C1 and becomes a liquid phase and enters into the top separation tank G2; on part of the liquid phase is outputted as a top product 4 from the apparatus (the main component is A, containing a trace amount of component B), and the other part of the liquid phase is returned as a top reflux liquid 5 to the top of the dividing wall column T. The top reflux liquid 5 enters flows through the common rectifying section T1 and enters into the mid-section buffer tank G1, and is divided into two streams under the action of the mid-section reflux pump P1, the mid-section reflux heater H1 at the feeding side and the mid-section reflux heater H2 at the discharging side, wherein one stream is a mid-section reflux liquid 7 at the feeding side and the other stream is a mid-section reflux liquid 8 at the discharging side (the temperature difference between the left and right sides of the dividing wall may be controlled to be 15~30°C). After mass transfer on the right side of the dividing wall, a mid-section side-cut product 9 is obtained and discharged from the apparatus (the main component is B, containing a trace amount of components A and C). The liquid phase 10 enters into the common stripping section from the dividing wall section, and finally enters into the bottom of the dividing wall column T. The liquid phase 11 at the bottom of the column is divided into two parts, wherein one part is outputted as a bottom product 12 from the apparatus (the main component is C, with a trace amount of component B), and the other part is vaporized in the bottom reboiler H3 and then returned as a returned gas phase 13 to the dividing wall column T. The returned gas phase 13 passes through the common stripping section and then is distributed by the gas phase distribution control apparatus in the present invention, so as to control the flow rates of gas phase entering into the left side and right side of the dividing wall (the ratio of the flow rate of the gas phase entering into the right side of the dividing wall to the flow rate of the gas phase entering into the left side of the dividing wall may be controlled within a range of 0: 1-8).

The above descriptions of the specific embodiments of the present invention are for the purpose of explanation and illustration. The description is not intended to limit the present invention to the disclosed specific forms; moreover, it is obvious that various modifications and alterations can be made in light of the above teaching. The exemplary embodiments are selected and described in order to explain the specific principle of the present invention and its practical application, so as to enable those skilled in the art to implement and utilize the exemplary embodiments of the present invention and make various choices and changes.

## Claims

1. A gas phase distribution control apparatus (30) for a dividing wall column, comprising:
a filler layer (35) for removing liquid from a gas phase; and
a distribution layer arranged above the filler layer (35) and provided with at least two gas phase channels (31) that are independent of each other and respectively communicate with the filler layer (35) and the upside of the distribution layer,
wherein each gas phase channel (31) has an inlet close to the filler layer (35) and an outlet close to the upside of the distribution layer, and at least two of the inlets are respectively arranged with an opening that is adjustable in size by means of a gas phase distribution mechanism according to a preset gas phase distribution ratio,
wherein the distribution layer is provided with two of the gas phase channels (31),
and the gas phase distribution mechanism comprises:
a hollow circular ring (36) that is fixed above the filler layer (35) and comprises three sections sequentially arranged in circumferential direction, wherein the bottom of one section is provided with two inlets that are spaced apart from each other or communicate with each other in the circumferential direction of the hollow circular ring (36), and the other two sections are respectively located at two ends of said one section and have respectively an outlet in the top; and
a slider (33) that is adaptively arranged in inner cavity of the hollow circular ring (36) and slidable in said one section in the circumferential direction of the hollow circular ring (36), the gas phase distribution mechanism is arranged to adjust the size of the two inlets by changing the position of the slider (33);
or, wherein the gas phase distribution mechanism comprises:
a hollow circular ring (36) that is fixed above the filler layer (35) and comprises at least four sections arranged sequentially in circumferential direction, wherein the bottoms of at least two of the at least four sections are respectively provided with an inlet, and at least the other two of the at least four sections are respectively provided with an outlet in the tops, and the inlets and the outlets are alternately arranged in the circumferential direction of the hollow circular ring; and
at least two sliders (33A, 33B) that are adaptively arranged in inner cavity of the hollow circular ring (36) and slidable in the circumferential direction of the hollow circular ring (36),
the gas phase distribution mechanism is arranged to adjust the size of the at least two inlets by changing the positions of the at least two sliders (33A, 33B).

2. The gas phase distribution control apparatus according to claim 1, wherein
the hollow circular ring comprises four sections L1, L2, L3 and L4 that have the same arc length and are arranged sequentially, wherein the bottoms of L1 and L3 are respectively provided with a hollowed inlet part to form the two inlets, and the tops of L2 and L4 are respectively provided with a hollowed outlet part to form the two outlets;
the gas phase distribution mechanism comprises two sliders that are slidably arranged in L1 and L3 respectively.

3. The gas phase distribution control apparatus according to claim 1, wherein
the hollow circular ring comprises four sections L1, L2, L3 and L4 that have the same arc length and are arranged sequentially, wherein the bottoms of L1 and L2 are respectively provided with a hollowed inlet part to form the two inlets, and the tops of L3 and L4 are respectively provided with a hollowed outlet part to form the two outlets;
the gas phase distribution mechanism comprises two sliders that are slidably arranged in L1 and L2 respectively.

4. The gas phase distribution control apparatus according to any of claims 1-3, wherein the slider(s) is/are a magnetic component, and the gas phase distribution mechanism further comprises an electromagnetic distribution control component, which comprises:
an arc-shaped track coaxially arranged outside the hollow circular ring;
an electromagnet that is arranged on the arc-shaped track and movable along the arc-shaped track; and
an electromagnetic controller arranged to drive the electromagnet to move according to the preset gas phase distribution ratio so as to drive the slider to a desired position.

5. The gas phase distribution control apparatus according to claim 4, wherein the inner cavity of the hollow circular ring has a circular cross section, and the slider is a hollow iron ball.

6. The gas phase distribution control apparatus according to any of claims 1-3, comprising a baffle plate arranged between the distribution layer and the filler layer so that the filler layer communicates with the upside of the distribution layer only through the gas phase channel; and/or
a filler grille is provided at the bottom of the filler layer.

7. The gas phase distribution control apparatus according to claim 6, wherein
the baffle plate is hermetically arranged at the inner side of the hollow circular ring and located at a middle position of the hollow circular ring in the axial direction, and/or
the porosity of the filler grille is 5%~15%.

8. A dividing wall column, comprising the gas phase distribution control apparatus according to any of claims 1-7, wherein a dividing wall of the dividing wall column is located in the middle section of the column body and extends in the axial direction of the column body, and divides the internal space of the column body into a common rectifying section above the dividing wall, a feeding section on the left side of the dividing wall, a discharging section on the right side of the dividing wall, and a common stripping section below the dividing wall, the gas phase distribution control apparatus is arranged below the dividing wall, and said at least two outlets communicate with the two sides of the dividing wall respectively.

9. The dividing wall column according to claim 8, wherein
the gas phase distribution control apparatus comprises two gas rise channels that communicate with said at least two outlets respectively and lead to the two sides of the dividing wall respectively; and/or
the dividing wall has a multi-layer hollow structure, and the hollow part of the dividing wall is filled with an inert gas or heat-insulating material.

10. The dividing wall column according to claim 9, wherein the cross-sectional area of the gas rise channel is 10%~40% of the cross-sectional area of the column body; and/or
the cross section of the gas rise channel is rectangular, square or circular.

## Patentansprüche

1. Gasphasenverteilungssteuervorrichtung (30) für eine Trennwandkolonne, umfassend:
eine Füllmaterialschicht (35) zur Entfernung von Flüssigkeit aus einer Gasphase und
eine Verteilungsschicht, die oberhalb der Füllmaterialschicht (35) angeordnet ist und mit mindestens zwei Gasphasenkanälen (31) versehen ist, die unabhängig voneinander sind und jeweils mit der Füllmaterialschicht (35) und der Oberseite der Verteilungsschicht in Verbindung stehen, wobei jeder Gasphasenkanal (31) einen Einlass in der Nähe der Füllmaterialschicht (35) und einen Auslass in der Nähe der Oberseite der Verteilungsschicht aufweist und mindestens zwei der Einlässe jeweils mit einer Öffnung angeordnet sind, die mittels eines Gasphasenverteilungsmechanismus gemäß einem voreingestellten Gasphasenverteilungsverhältnis größenverstellbar ist,
wobei die Verteilungsschicht mit zwei der Gasphasenkanäle (31) versehen ist und der Gasphasenverteilungsmechanismus umfasst:
einen hohlen Kreisring (36), der oberhalb der Füllmaterialschicht (35) befestigt ist und drei Abschnitte umfasst, die nacheinander in Umfangsrichtung angeordnet sind, wobei die Unterseite eines Abschnitts mit zwei Einlässen versehen ist, die voneinander beabstandet sind oder miteinander in der Umfangsrichtung des hohlen Kreisrings (36) in Verbindung stehen, und die anderen zwei Abschnitte sich jeweils an zwei Enden des einen Abschnitts befinden und jeweils einen Auslass in der Oberseite aufweisen, und
einen Schieber (33), der im inneren Hohlraum des hohlen Kreisrings (36) adaptiv angeordnet und in dem einen Abschnitt in der Umfangsrichtung des hohlen Kreisrings (36) verschiebbar ist,
der Gasphasenverteilungsmechanismus so angeordnet ist, dass die Größe der zwei Einlässe durch Änderung der Position des Schiebers (33) eingestellt wird,
oder wobei der Gasphasenverteilungsmechanismus umfasst:
einen hohlen Kreisring (36), der oberhalb der Füllmaterialschicht (35) angeordnet ist und mindestens vier Abschnitte umfasst, die nacheinander in Umfangsrichtung angeordnet sind, wobei die Unterseiten von mindestens zwei der mindestens vier Abschnitte jeweils mit einem Einlass ausgestattet sind und mindestens die anderen zwei der mindestens vier Abschnitte jeweils mit einem Auslass in der Oberseite ausgestattet sind und die Einlässe und die Auslässe abwechselnd in der Umfangsrichtung des hohlen Kreisrings angeordnet sind und
mindestens zwei Schieber (33A, 33B), die im inneren Hohlraum des hohlen Kreisrings (36) adaptiv angeordnet sind und in der Umfangsrichtung des hohlen Kreisrings (36) verschiebbar sind,
der Gasphasenmechanismus so angeordnet ist, dass die Größe der mindestens zwei Einlässe durch Änderung der Positionen der mindestens zwei Schieber (33A, 33B) einstellt wird.

2. Gasphasenverteilungssteuervorrichtung gemäß Anspruch 1, wobei
der hohle Kreisring vier Abschnitte L1, L2, L3 und L4 umfasst, die dieselben Bogenlänge aufweisen und nacheinander angeordnet sind, wobei die Unterseiten von L1 und L3 jeweils mit einem ausgehöhlten Einlassteil versehen sind, um die zwei Einlässe zu bilden, und die Oberseiten von L2 und L4 jeweils mit einem ausgehöhlten Auslassteil versehen sind, um die zwei Auslässe zu bilden,
der Gasphasenverteilungsmechanismus zwei Schieber umfasst, die verschiebbar in L1 bzw. L3 angeordnet sind.

3. Gasphasenverteilungssteuervorrichtung gemäß Anspruch 1, wobei
der hohle Kreisring vier Abschnitte L1, L2, L3 und L4 umfasst, die dieselbe Bogenlänge aufweisen und nacheinander angeordnet sind, wobei die Unterseiten von L1 und L2 jeweils mit einem ausgehöhlten Einlassteil versehen sind, um die zwei Einlässe zu bilden, und die Oberseiten von L3 und L4 jeweils mit einem ausgehöhlten Auslassteil versehen sind, um die zwei Auslässe zu bilden,
der Gasphasenverteilungsmechanismus zwei Schieber umfasst, die verschiebbar in L1 bzw. L2 angeordnet sind.

4. Gasphasenverteilungssteuervorrichtung gemäß einem der Ansprüche 1-3, wobei der/die Schieber ein magnetisches Bauteil ist/sind und der Gasphasenverteilungsmechanismus ferner ein elektromagnetisches Verteilungssteuerbauteil umfasst, welches umfasst:
eine bogenförmige Bahn, die koaxial außerhalb des hohlen Kreisrings angeordnet ist,
einen Elektromagneten, der auf der bogenförmigen Bahn angeordnet und entlang der bogenförmigen Bahn beweglich ist, und
einen elektromagnetischen Regler, der den Elektromagneten steuert, sich gemäß dem voreingestellten Gasphasenverteilungsverhältnis so zu bewegen, dass er den Schieber zu einer gewünschten Position führt.

5. Gasphasenverteilungssteuervorrichtung gemäß Anspruch 4, wobei der innere Hohlraum des hohlen Kreisrings einen kreisförmigen Querschnitt aufweist und der Schieber eine hohle Eisenkugel ist.

6. Gasphasenverteilungssteuervorrichtung gemäß einem der Ansprüche 1-3, umfassend ein Leitblech, das zwischen der Verteilungsschicht und der Füllmaterialschicht angeordnet ist, so dass die Füllmaterialschicht mit der Oberseite der Verteilungsschicht lediglich durch den Gasphasenkanal in Verbindung steht, und/oder
ein Füllmaterialgrill ist an der Unterseite der Füllmaterialschicht vorhanden.

7. Gasphasenverteilungssteuervorrichtung gemäß Anspruch 6, wobei
das Leitblech hermetisch an der Innenseite des hohlen Kreisrings angeordnet ist und sich an einer mittleren Position des hohlen Kreisrings in der axialen Richtung befindet und/oder
die Porosität des Füllmaterialgrills 5 %-15 % beträgt.

8. Trennwandkolonne, umfassend die Gasphasenverteilungssteuervorrichtung gemäß einem der Ansprüche 1-7, wobei sich eine Trennwand der Trennwandkolonne in dem mittleren Abschnitt des Kolonnenkörpers befindet und sich in der axialen Richtung des Kolonnenkörpers erstreckt und den Innenraum des Kolonnenkörpers in einen gemeinsamen Rektifizierabschnitt oberhalb der Trennwand, einem Zuführabschnitt auf der linken Seite der Trennwand, einen Abführabschnitt auf der rechten Seite der Trennwand und einen gemeinsamen Strippungsabschnitt unterhalb der Trennwand aufteilt, die Gasphasenverteilungssteuervorrichtung unterhalb der Trennwand angeordnet ist und die mindestens zwei Auslässe jeweils mit den beiden Seiten der Trennwand in Verbindung stehen.

9. Trennwandkolonne gemäß Anspruch 8, wobei
die Gasphasenverteilungssteuervorrichtung zwei Gassteigkanäle aufweist, die jeweils mit den mindestens zwei Auslässen in Verbindung stehen und jeweils zu den zwei Seiten der Trennwand führen, und/oder
die Trennwand eine mehrschichtige Hohlstruktur aufweist und der hohle Teil der Trennwand mit einem Inertgas oder wärmeisolierenden Material gefüllt ist.

10. Trennwandkolonne gemäß Anspruch 9, wobei die Querschnittsfläche des Gassteigkanals 10 %-40 % der Querschnittsfläche des Kolonnenkörpers beträgt und/oder der Querschnitt des Gassteigkanals rechteckig, quadratisch oder kreisförmig ist.

## Revendications

1. Appareil (30) de commande de distribution de phase gazeuse pour une colonne à paroi de séparation, comprenant :
une couche de remplissage (35) pour éliminer du liquide d'une phase gazeuse ; et
une couche de distribution agencée au-dessus de la couche de remplissage (35) et pourvue d'au moins deux canaux (31) de phase gazeuse qui sont indépendants l'un de l'autre et communiquent respectivement avec la couche de remplissage (35) et le haut de la couche de distribution,
dans lequel chaque canal (31) de phase gazeuse présente une entrée proche de la couche de remplissage (35) et une sortie proche du haut de la couche de distribution, et au moins deux des entrées sont agencées respectivement avec une ouverture réglable en taille au moyen d'un mécanisme de distribution de phase gazeuse selon un rapport de distribution de phase gazeuse prédéfini,
dans lequel la couche de distribution est pourvue de deux canaux (31) de phase gazeuse,
et le mécanisme de distribution de phase gazeuse comprend :
un anneau circulaire creux (36) fixé au-dessus de la couche de remplissage (35) et qui comprend trois sections agencées séquentiellement dans une direction circonférentielle, la partie inférieure d'une section étant pourvue de deux entrées qui sont espacées l'une de l'autre ou qui communiquent l'une avec l'autre dans la direction circonférentielle de l'anneau circulaire creux (36),
et les deux autres sections sont situées respectivement au niveau de deux extrémités de ladite une section et présentent respectivement une sortie dans la partie supérieure ; et
un curseur (33) qui est agencé de manière adaptative dans la cavité interne de l'anneau circulaire creux (36) et qui est apte à coulisser dans ladite une section dans la direction circonférentielle de l'anneau circulaire creux (36),
le mécanisme de distribution de phase gazeuse est agencé pour régler la taille des deux entrées en modifiant la position du curseur (33) ;
ou, dans lequel le mécanisme de distribution de phase gazeuse comprend :
un anneau circulaire creux (36) qui est fixé au-dessus de la couche de remplissage (35)
et qui comprend au moins quatre sections agencées séquentiellement dans une direction circonférentielle, dans lequel les parties inférieures d'au moins deux parmi les au moins quatre sections sont respectivement pourvues d'une entrée, et au moins les deux autres parmi les au moins quatre sections sont respectivement pourvues d'une sortie dans les parties supérieures, et les entrées et les sorties sont agencées alternativement dans la direction circonférentielle de l'anneau circulaire creux ; et
au moins deux curseurs (33A, 33B) qui sont agencés de manière adaptative dans la cavité interne de l'anneau circulaire creux (36) et qui sont aptes à coulisser dans la direction circonférentielle de l'anneau circulaire creux (36),
le mécanisme de distribution de phase gazeuse est agencé pour régler la taille des au moins deux entrées en modifiant les positions des au moins deux curseurs (33A, 33B).

2. Appareil de commande de distribution de phase gazeuse selon la revendication 1, dans lequel
l'anneau circulaire creux comprend quatre sections L1, L2, L3 et L4 qui présentent la même longueur d'arc et sont agencées séquentiellement, dans lequel les parties inférieures de L1 et L3 sont pourvues respectivement d'une partie d'entrée creuse pour former les deux entrées, et les parties supérieures de L2 et L4 sont pourvues respectivement d'une partie de sortie creuse pour former les deux sorties ;
le mécanisme de distribution de phase gazeuse comprend deux curseurs qui sont agencés de manière coulissante dans L1 et L3 respectivement.

3. Appareil de commande de distribution de phase gazeuse selon la revendication 1, dans lequel
l'anneau circulaire creux comprend quatre sections L1, L2, L3 et L4 qui présentent la même longueur d'arc et sont agencées séquentiellement, dans lequel les parties inférieures de L1 et L2 sont pourvues respectivement d'une partie d'entrée creuse pour former les deux entrées, et les parties supérieures de L3 et L4 sont pourvues respectivement d'une partie de sortie creuse pour former les deux sorties ;
le mécanisme de distribution de phase gazeuse comprend deux curseurs qui sont agencés de manière coulissante dans L1 et L2 respectivement.

4. Appareil de commande de distribution de phase gazeuse selon l'une quelconque des revendications 1 à 3, dans lequel le ou les curseur(s) est/sont un composant magnétique, et le mécanisme de distribution de phase gazeuse comprend en outre un composant de commande de distribution électromagnétique, qui comprend :
une voie en forme d'arc agencée coaxialement à l'extérieur de l'anneau circulaire creux ;
un électroaimant agencé sur la voie en forme d'arc et mobile le long de la voie en forme d'arc ; et
un dispositif de commande électromagnétique agencé pour entraîner l'électroaimant à se déplacer selon le rapport de distribution de phase gazeuse prédéfini de manière à entraîner le curseur jusqu'à une position souhaitée.

5. Appareil de commande de distribution de phase gazeuse selon la revendication 4, dans lequel la cavité interne de l'anneau circulaire creux présente une section transversale circulaire, et le curseur est une boule de fer creuse.

6. Appareil de commande de distribution de phase gazeuse selon l'une quelconque des revendications 1 à 3, comprenant une plaque de déflecteur agencée entre la couche de distribution et la couche de remplissage de sorte que la couche de remplissage ne communique avec le haut de la couche de distribution qu'à travers le canal de phase gazeuse ; et/ou
une grille de remplissage est prévue au niveau de la partie inférieure de la couche de remplissage.

7. Appareil de commande de distribution de phase gazeuse selon la revendication 6, dans lequel
la plaque de déflecteur est agencée hermétiquement au niveau du côté intérieur de l'anneau circulaire creux et située au niveau d'une position centrale de l'anneau circulaire creux dans la direction axiale, et/ou
la porosité de la grille de remplissage est de 5 % à 15 %.

8. Colonne à paroi de séparation, comprenant l'appareil de commande de distribution de phase gazeuse selon l'une quelconque des revendications 1 à 7, dans laquelle une paroi de séparation de la colonne à paroi de séparation est située dans la section centrale du corps de colonne et s'étend dans la direction axiale du corps de colonne, et sépare l'espace interne du corps de colonne en une section de rectification commune au-dessus de la paroi de séparation, une section d'alimentation du côté gauche de la paroi de séparation, une section d'évacuation du côté droit de la paroi de séparation et une section de stripage commune sous la paroi de séparation, l'appareil de commande de distribution de phase gazeuse est agencé sous la paroi de séparation et lesdites au moins deux sorties communiquent avec les deux côtés de la paroi de séparation respectivement.

9. Colonne à paroi de séparation selon la revendication 8, dans laquelle
l'appareil de commande de distribution de phase gazeuse comprend deux canaux de montée de gaz qui communiquent avec lesdites au moins deux sorties respectivement et mènent aux deux côtés de la paroi de séparation respectivement ; et/ou
la paroi de séparation a une structure creuse multicouche, et la partie creuse de la paroi de séparation est remplie d'un gaz inerte ou d'un matériau isolant thermique.

10. Colonne à paroi de séparation selon la revendication 9, dans laquelle la zone de section transversale du canal de montée de gaz est de 10 % à 40 % de la zone de section transversale du corps de colonne ; et/ou
la section transversale du canal de montée de gaz est rectangulaire, carrée ou circulaire.
